# EUROPEAN PATENT SPECIFICATION

(11) **EP 2 778 516 B1**
(45) Date of publication and mention of the grant of the patent: **29.08.2018**
(21) Application number: 14158915.0
(22) Date of filing: 11.03.2014
(51) Int. Cl.: F21V 8/00

(54) **Guided light diffuser panel and method of manufacturing guided light diffuser panel**
Geführtes Lichtdiffusorpaneel und Verfahren zur Herstellung des geführten Lichtdiffusorpaneels
Panneau de diffuseur de lumière guidée et procédé de fabrication d'un panneau diffuseur de lumière guidée

(30) Priority: 14.03.2013 US 201313826099
(43) Date of publication of application: 17.09.2014
(73) Proprietor: Panasonic Intellectual Property Management Co., Ltd., Osaka-shi, Osaka 540-6207 (JP)
(72) Inventor: MIZUYAMA, Yosuke, Newton, MA 02459 (US); HARRISON, Nathan, Newton, MA 02459 (US); SATO, Ayumu, Chuo-ku, Osaka, 540-6207 (JP)
(74) Representative: Müller-Boré & Partner Patentanwälte PartG mbB

(56) References cited:
- EP-A1- 1 930 718
- US-A1- 2010 177 533
- US-B1- 8 033 706

## Description

### Field

The present invention generally relates to guided light diffusers (light waveguide diffusers) for illuminating environments or objects and methods of manufacturing the guided light diffusers.

### Background

Light sources used for illumination typically require waveguides to transfer light from the light sources to diffusing points and diffusers to diffuse or to spread out or to scatter the light to produce soft light, which generally cast shadows with no edges or soft edges as opposed to sharp edges. For example, in photography, soft light is used to reduce visibility of wrinkles for people to achieve a more youthful look.

Typical diffusers are hazy in appearance, or the diffusers are opaque or non-transparent. That is, an observer cannot see objects clearly through a typical diffuser. Typical diffusers may include for example, ground glass diffusers, Teflon diffusers, holographic diffusers, opal glass diffusers, and greyed glass diffusers. Since such diffusers are not transparent, their presence may seem distracting and unpleasant for observers. Additionally, typical diffusers may scatter significant amounts of light back toward the light source, and thus, efficiency of the light source is reduced when such typical diffusers are used.

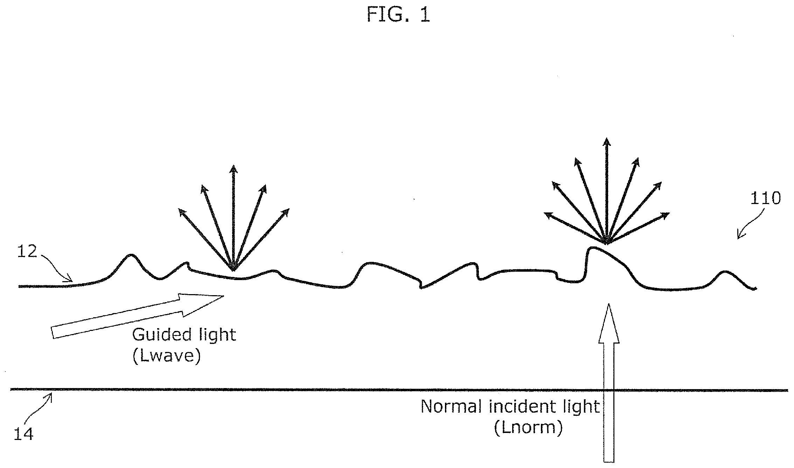

FIG. 1 illustrates a conventional guided light diffuser panel 110, which may be, for example, a ground glass diffuser panel. Such conventional ground glass diffuser panels are isotropically diffusive and therefore look hazy and not transparent. As illustrated in FIG. 1, when light, generally with a wavelength in the visible light band, intersects the diffusing surface 12 of the guided light diffuser panel 110, the uneven and rough texture of the diffusing surface 12 causes the light to become scattered or diffused in nearly all directions, depending on the different surface angles of the diffusing surface 12. Here, such light may be the guided light which is waveguided through the guided light diffuser panel 110 or the incident light which is incident on the flat surface 14 which is opposite of the diffusing surface 12. Since light is diffused in nearly all directions in the diffusing surface 12, the guided light diffuser 110 is called isotropically diffusive. Thus, objects appear hazy and not clearly visible when viewed through such conventional ground glass diffusers, thus making the conventional ground glass diffusers appear opaque or non-transparent.

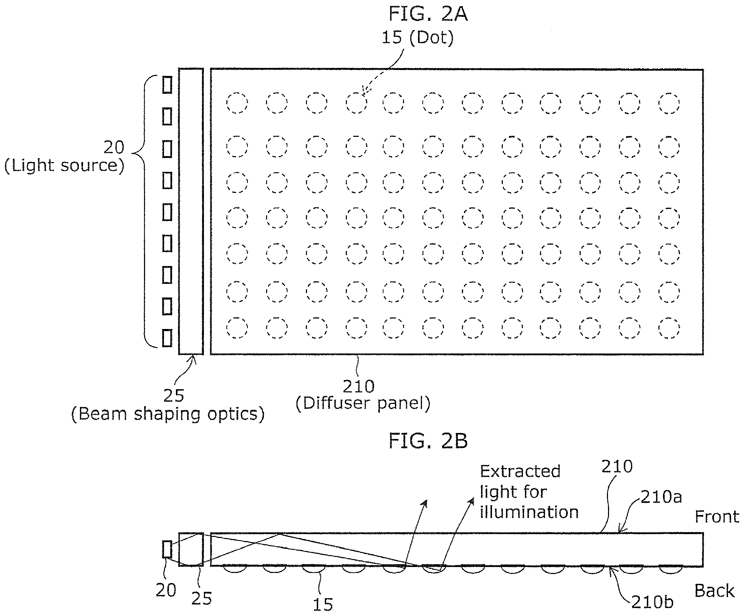

FIGS. 2A and 2B illustrate another conventional guided light diffuser panel 210, which may be for example, a guided light diffuser panel with dots 15, which are inkjet dots, regularly aligned thereon. Specifically, FIG. 2A illustrates a top view of the conventional guided light diffuser panel 210. FIG. 2B illustrates a side view of the conventional guided light diffuser panel 210. As illustrated in FIGS. 2A and 2B, the guided light diffuser panel 210 includes an array of regularly aligned printed dots 15. The dots 15 are used as the light extraction feature of flexible light. The dots 15 may be a mass of material that is added to the surface of the guided light diffuser panel 210, and may vary is shape and size. The dots 15 may be, for example, circular, oval, curvilinear, square, rectangular, triangular, polygonal, or irregular in shape. The dots 15 may also be about the same size or vary from one dot to another. The dots 15 may be printed upon one of the front side 210a and back side 210b of the guided light diffuser panel 210 or both of the front side 210a and back side 210b. The dots 15 extract light which is inputted by the light source 20 such as a light emitting diode (LED) and incident on the guided light diffuser panel 210. The light emitted from the light source 20 toward the guided light diffuser panel 210 may transmit through beam shaping optics 25.

The following documents may be considered as disclosing the background art.

US 2010/0177533 A1 discloses a panel lighting apparatus and methods of its manufacture. The apparatus can include a light source, an at least partially transparent panel comprising a planar front surface and a planar back surface, the panel disposed in conjunction with the light source such that light from the light source is input into at least one edge of the panel and guided therein, and a plurality of light extraction dots disposed on the planar back surface, the plurality of light extraction dots configured to reflect light incident on the planar back surface and extract light from the light source propagating in the panel through the planar front surface.

EP 1 930 718 A1 discloses a light irradiation device that can reduce moire interference with a simple and low-cost arrangement without sacrificing a compact design by comprising a transparent plate which has a predetermined thickness and one of whose surfaces is arranged as an object facing surface to face an object such as a product on which light is to be irradiated, multiple reflecting sections that are laid out on other surface of the transparent plate with forming a microscopic space therebetween with its light reflecting surface facing a direction of the object, a light source section arranged at a position where at least a part of the emitted light is transmitted, reaches the light reflecting surface, is reflected on the light reflecting surface and is emitted from the object facing surface, and an antireflection film that covers the object facing surface.

US 8,033,706 B1 discloses a lightguide that comprises a low refractive index region disposed between light extracting region and a non-scattering region. In an example, volumetric scattering lightguide comprises a low refractive index region disposed between a volumetric scattering region and a non-scattering region. In some examples, a light emitting device comprising a volumetric scattering lightguide can angularly filter light input into the edge of a volumetric scattering lightguide by controlling the refractive index of the low refractive index region relative to the refractive index of the non-scattering region to prevent direct illumination of the volumetric scattering region, provide a luminance uniformity greater than 70%, or improve the angular luminous intensity of the light emitting device. The volumetric scattering lightguide may be curved, tapered, and a light emitting device comprising the same may further comprise at least one light source and a light redirecting element.

### Summary

### Technical Problem

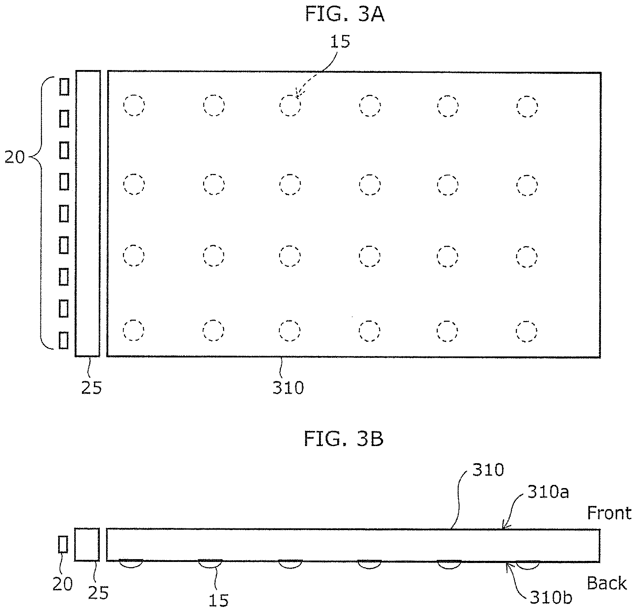

FIGS. 3A and 3B illustrate a transparent guided light diffuser panel, which may be for example, a guided light diffuser panel with the dots 15 sparsely or randomly aligned thereon. Specifically, FIG. 3A illustrates a top view of a transparent guided light diffuser panel 310. FIG. 3B illustrates a side view of a transparent guided light diffuser panel 310.

As illustrated in FIGS. 3A and 3B, the guided light diffuser panel 310 includes an array of sparsely aligned printed dots 15. The dots 15 are used as the light extraction feature of flexible light. The dots 15 may be a mass of material that is added to the surface of the guided light diffuser panel 310, and may vary is shape and size. The dots 15 may be, for example, circular, oval, curvilinear, square, rectangular, triangular, polygonal, or irregular in shape. The dots 15 may also be about the same size or vary from one dot to another. The dots 15 may be printed upon one of the front side 310a and back side 310b of the guided light diffuser panel 310 or both of the front 310a and back 310b. The dots 15 extract light which is inputted by the light source 20 such as an LED and incident on the guided light diffuser panel 310. The light emitted from the light source 20 toward the guided light diffuser panel 310 may transmit through the beam shaping optics 25.

Through choices of materials, printing, and patterns, the lit and unlit properties of the guided light diffuser panel 310 can be largely independently controlled. For example, large dots 15 may be used to limit the transmission through the guided light diffuser panel 310 when the light sources 20 are dimmed or unlit. Similarly, a high concentration of smaller dots 15 can limit the transmission through the guided light diffuser panel 310 when the light sources 20 are dimmed or unlit. The large or small dots 15 may comprise, for example, diffusive particles or opaque materials, and be configured thicker or with a higher density to limit light transmission through the guided light diffuser panel 310. It should be noted that in some embodiments, the concentration of smaller dots 15 may be lowered to allow light to transmit through the guided light diffuser panel 310 when the light sources 20 are dimmed or unlit.

In one example, the dots 15 are printed onto the guided light diffuser panel 310 by an ink jet printer, screen printing techniques, or any other ink printer. The dots 15 may also be rolled, splattered, or sprayed onto the guided light diffuser panel 310. The dots 15 in any of the embodiments described herein can be formed by any of these processes, unless specifically stated otherwise.

The present disclosure, through one or more of its various aspects, embodiments, and/or specific features or sub-components, provides various devices, apparatuses, or structures that can achieve the transparent guided light diffuser, as well as methods that can be used to manufacture the transparent waveguide diffuser.

According to an aspect, the problem relates to providing a transparent guided light diffuser of higher efficiency.

### Solution to Problem

The problem is solved by the features disclosed in the independent claims. Preferred embodiments are defined in the dependent claims.

One aspect of a guided light diffuser panel in the present disclosure is a guided light diffuser panel to which a light source is optically coupled, including a first surface that is of low reflection to a plurality of wavelengths of light; and a second surface having diffusing dots, in which visible light from the light source transmits through the guided light diffuser panel, and at least a portion of the visible light from the light source is reflected from the diffusing dots on the second surface, and transmits through the first surface.

According to another aspect of the present disclosure, in one aspect of the guided light diffuser panel, the diffusing dots may be one of micro-lenses, micro-dots, and micro-bumps formed by one of molding, embossing, screen printing, and inkjet printing.

According to another aspect of the present disclosure, in one aspect of the guided light diffuser panel, the diffusive dots may cover 20 to 50% of the second surface of the guided light diffuser panel.

According to another aspect of the present disclosure, in one aspect of the guided light diffuser panel, the diffusing dots may be distributed in a grid array, in one of sparse, staggered, random, semi-random, and interleaved arrangements, on the guided light diffuser panel.

According to another aspect of the present disclosure, in one aspect of the guided light diffuser panel, a period of the diffusing dots may be enlarged or reduced.

According to another aspect of the present disclosure, in one aspect of the guided light diffuser panel, shapes of the dots may be configurable into variable designs.

According to another aspect of the present disclosure, in one aspect of the guided light diffuser panel, the guided light diffuser panel may be transparent.

According to another aspect of the present disclosure, in one aspect of the guided light diffuser panel, the light source may be an LED.

According to another aspect of the present disclosure, in one aspect of the guided light diffuser panel, the first surface may be coated with a single-layer or multi-layer anti-reflective coating.

According to another aspect of the disclosure, in one aspect of the guided light diffuser panel, the guided light diffuser panel may have a concave shape which enables divergent reflection of the visible light.

According to another aspect of the present disclosure, in one aspect of the guided light diffuser panel, the light source may be mounted on at least one location on one edge of the guided light diffuser panel, and transmit the plurality of wavelengths of light into the guided light diffuser panel.

According to another aspect of the guided light diffuser panel of the present disclosure, in one aspect of the guided light diffuser panel, there is a guided light diffuser panel to which a light source is optically coupled, including a first surface that has a concave shape which enables divergent reflection of visible light; and a second surface having diffusing dots, in which the visible light from the light source transmits through the guided light diffuser panel, and at least a portion of the visible light from the light source is reflected from the diffusing dots on the second surface, and divergently transmits through the second surface after at least partially reflecting off the first surface.

According to another aspect of the present disclosure, in one aspect of the guided light diffuser panel, the diffusing dots may be one of micro-lenses, micro-dots, and micro-bumps formed by one of molding, embossing, screen printing, and inkjet printing.

According to another aspect of the present disclosure, in one aspect of the guided light diffuser panel, the diffusing dots may cover 20 to 50% of the second surface of the guided light diffuser panel.

According to another aspect of the present disclosure, in one aspect of the guided light diffuser panel, the diffusing dots may be distributed in a grid array, in one of sparse, staggered, random, semi-random, and interleaved arrangements, on the guided light diffuser panel.

According to another aspect of the present disclosure, in one aspect of the guided light diffuser panel, a period of the diffusing dots may be enlarged or reduced.

According to another aspect of the present disclosure, in one aspect of the guided light diffuser panel, shapes of the dots may be configurable into variable designs.

According to another aspect of the present disclosure, in one aspect of the guided light diffuser panel, the guided light diffuser panel may be transparent.

According to another aspect of the present disclosure, in one aspect of the guided light diffuser panel, the light source may be an LED.

According to another aspect of the present disclosure, in one aspect of the guided light diffuser panel, the first surface may be coated with a single-layer or multi-layer anti-reflective coating.

According to another aspect of the present disclosure, in one aspect of the guided light diffuser panel, the light source may be mounted on at least one location on one edge of the guided light diffuser panel, and transmit a plurality of wavelengths of light into the waveguide light diffuser panel.

Moreover, one aspect of a method of manufacturing a guided light diffuser panel is a method of manufacturing the guided light diffuser panel to which a light source is optically coupled, the method including preparing a first surface that is of low reflection to a plurality of wavelengths of light; and preparing a second surface having diffusing dots, in which visible light from the light source transmits through the guided light diffuser panel, and at least a portion of the visible light from the light source is reflected from the diffusing dots on the second surface, and transmits through the first surface.

Moreover, one aspect of the lighting fixture of the present disclosure includes one of the guided light diffuser panels to which light sources are optically coupled, described above..

### Advantageous Effects

The present disclosure provides a transparent guided light diffuser of higher efficiency.

### BRIEF DESCRIPTION OF THE DRAWUINGS

[FIG. 1] FIG. 1 illustrates a conventional guided light diffuser panel.
[FIG. 2A] FIG. 2A is a top view of conventional guided light diffuser panel with printed dots.
[FIG. 2B] FIG. 2B is a side view of a conventional guided light diffuser panel with printed dots.
[FIG. 3A] FIG. 3A is a top view of a transparent guided light diffuser panel with printed dots.
[FIG. 3B] FIG. 3B is a side view of a transparent guided light diffuser panel with printed dots.
[FIG. 4] FIG. 4 illustrates how light propagates through a guided light diffuser panel.
[FIG. 5A] FIG. 5A illustrates an exemplary embodiment in which light propagates through a guided light diffuser panel coated with an anti-reflective coating.
[FIG. 5B] FIG. 5B illustrates an exemplary embodiment in which light propagates through a guided light diffuser panel coated with an anti-reflective coating and having a nano-pattern.
[FIG. 6A] FIG. 6A illustrates an exemplary embodiment of a guided light diffuser panel having a nano-pattern applied in a sparse or staggered manner.
[FIG. 6B] FIG. 6B illustrates an exemplary embodiment of a guided light diffuser panel having a nano-pattern applied in a random or semi-random manner.
[FIG. 7] FIG. 7 illustrates an example of overlapped Talbot images.
[FIG. 8] FIG. 8 illustrates an example of a guided light diffuser panel having a concave surface.
[FIG. 9] FIG. 9 is a flowchart illustrating a method of manufacturing a guided light diffuser according to one embodiment of the present disclosure.

### Description of Embodiment(s)

The following describes the embodiment(s) of the present disclosure with reference to the drawings. However, each figure is a schematic diagram and not necessarily precisely drawn. Moreover, the same reference sings are used for substantially the same structures through the figures, and thus overlapped explanation may be omitted or simplified.

The present disclosure, through one or more of its various aspects, embodiments and/or specific features or sub-components, is thus intended to bring out one or more of the advantages as specifically noted below.

A transparent guided light diffuser panel which diffuses source light and transmits ambient light is disclosed. It should be noted that conventional guided light diffusers diffuse all light and therefore provide a hazy outcome.

In manufacturing a transparent guided light diffuser, a printing method, such as inkjet printing, screen printing techniques, or any other ink printing, may be used. In this method, micro-lenses in the form of dots (dots) are printed on one side of a guided light diffuser panel.

The dots (diffusing dots) cover at least a portion of the panel in a variety of arrangements. For example, the dots cover 20 to 50% of the surface of the guided light diffuser panel. It should be noted that the dot coverage range is not limited to 20 to 50%-, but may extend beyond this range in either direction.

The dots can be arranged in a sparse, staggered, random, semi-random, interleaved, or any other pattern.

The other side of the panel (the surface on which the dots are not provided) is coated with an anti-reflective material (single-layer or multi-layer material), and is a low reflecting surface. That is, the other side of the guided light diffuser panel has lower reflectance than the surface of the guided light diffuser panel which is not coated with the anti-reflective material.

Alternatively, the shape of the guide light diffuser panel may be formed to diffuse, converge, or diverge light. For example, the guided light diffuser panel may have a concave surface. However, the surface of the guided light diffuser panel in the present disclosure is not limited to the concave shape as understood by those skilled in the art.

Moreover, the dot shape and size is designed for efficient reflection of the incident light, as opposed to the dots of conventional hazy guided light diffuser panel in which the reflection efficiency is low. In the guided light diffuser panel in the present disclosure, dots having high reflection efficiency enable reduction in the dot coverage.

Manufacturing using inkjet based printing is typically based on a grid positioning method. Using this method, inkjet dots are deposited on an imaginary grid on a guided light diffuser panel. Simply depositing dots using this method introduces a Talbot image, which is a periodic image of the micro-lenses formed by the dots. Unfortunately, the Talbot image disturbs the appearance quality of the light.

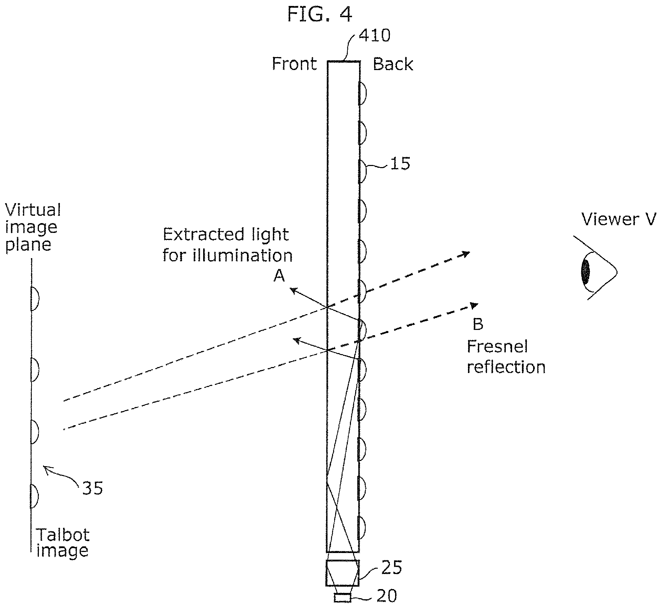

FIG. 4 illustrates a guided light diffuser panel 410 having inkjet dots deposited on one side of the panel. When light A is generated from a light source 20 (such as an LED), a portion of the light A, which is wavegudied through the guided light diffuser panel 410, is reflected off the dots 15 on the surface of the guided light diffuser panel 410, and becomes reflected light B, known as a Frensel reflection. As FIG. 4 illustrates, the reflected light B occurs when there is no anti-reflection material to prevent the light from reflecting off the guided light diffuser panel. Ultimately, the reflected light B becomes a light source that creates a virtual image 35, known as the Talbot image.

The Talbot image appears as a periodic and discrete image of dots 15 in a pattern similar to those arranged on the guided light diffuser panel 410. The Talbot image imparts unwanted luminance to any viewer V who sees the reflected light B in the line of sight.

Accordingly, it is preferable that a transparent guided light diffuser that can provide higher efficiency of lighting and a more desirable and transparent view be realized.

However, when manufacturing using an inkjet method, the grid positioning method is used to apply the dots unless a stylus method is used. In this method, dots are arranged in a grid array, on the guided light diffuser panel, as described above. This results in an undesirable Talbot image. The present disclosure has been made in view of the above problems, and the following describes specific solutions based on an embodiment.

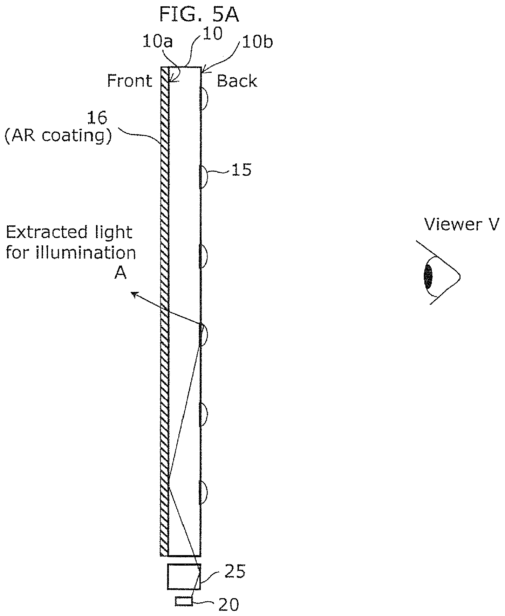

FIG. 5A illustrates a guided light diffuser panel 10 using inkjet dots and having a coating on one side. The guided light diffuser panel 10 illustrated in FIG. 5A can reduce or eliminate the unwanted Talbot image using one of several techniques, as described below. In order to reduce or eliminate the Talbot image, one of the following techniques may be used: (a) reduce or eliminate the light source, and/or (b) make the light source difficult to view.

In the present embodiment, the dots 15, which are inkjet dots, are deposited on a back side 10b of the guided light diffuser panel 10. As illustrated in FIG. 5A, the dots (diffusing dots) 15 are sparsely deposited on the back side (second surface) 10b of the guided light diffuser panel 10, and a predetermined material is applied on a front side (first surface) 10a of the guided light diffuser panel 10.

The light A emitted from the light source 20 propagates through the guided light diffuser panel 10, reflects off the dots 15, and then directs toward the front side 10a of the guided light diffuser panel 10, on which the light A is finally extracted as extracted light (depicted by the line A). In this case, in the present embodiment, with the front side 10a of the guided light diffuser panel 10 being coated with a coat film 16 of an anti-reflection (AR) material, the reflection of the propagating light off of the front side 10a of the guided light diffuser panel 10 is reduced or eliminated.

Thus, coating the front side 10a of the guided light diffuser panel 10 with an AR material or antireflection coating allows the front side 10a of the guided light diffuser panel 10 to have low reflectance to the wavelengths of light. This can reduce or eliminate, at the front side 10a, the reflection of the light, which has propagated through the guided light diffuser panel 10. Thus, the intensity of the Talbot image can be reduced.

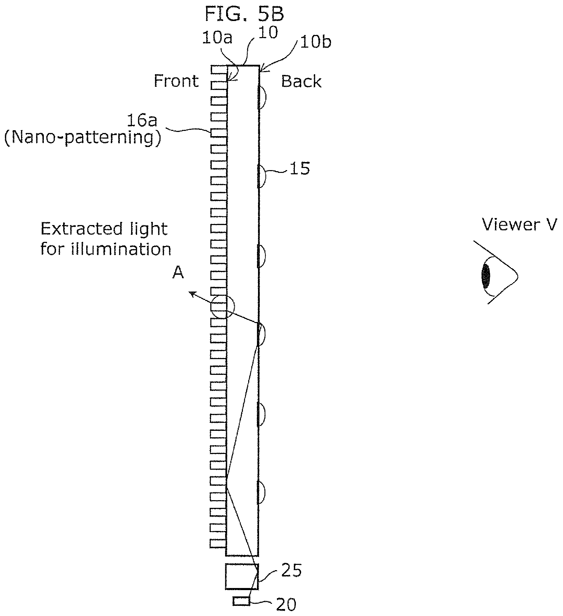

As illustrated in FIG. 5B, the coat film 16 made of the AR material or antireflection coating in the present embodiment can be, for example, formed by nano-patterning or other method. Moreover, the coat film, which is an antireflection coating, may be a single-layer or multi-layer coating.

It should be noted that the AR material or the antireflection coating is not limited to the above material or coating. It is appreciated that more than one type of AR material or antireflection coating may be used, and the AR material or antireflection coating may be applied using any technique known in the art or explained further below.

The light source 20 or a light emitting element on one edge of the guided light diffuser panel 10 is optically coupled to the guided light diffuser panel 10. The optically coupled light source 20 and the guided light diffuser panel 10 can be used as lighting equipment. Moreover, the guided light diffuser panel 10 may be integrated with the light source 20 or the light emitting element.

The light source 20 may be mounted on at least one place of one edge of the guided light diffuser panel 10. For example, a light emitting diode (LED), a laser diode (LD), or a super luminescent diode (SLD) can be used as the light source 20.

Moreover, collection lens, collimator, beam shaper, and others, which transmit light generated from the light source 20, may be used as beam shaping optics 25 (coupling optics).

The light source 20 may be mounted or bonded on one edge of the guided light diffuser panel 10, for example by mechanical mounting structures, chemical adhesives, heating, or a combination of such mounting methods.

The light source 20 may be, for example, designed so that light of one or more wavelengths in the visible light band is transmitted from one edge of the guided light diffuser panel 10 to the inside of the guided light diffuser panel 10. In this case, the visible light from the light source 20 is incident on the one edge of the guided light diffuser panel 10 at one or more angles of inclination relative to the plane of the one edge of the guided light diffuser panel 10 or at one or more angles that are greater than the total internal reflection (TIR) angle or the critical angle of the guided light diffuser panel 10. The visible light then transmits through the inside of the guided light diffuser panel 10.

In this configuration, a portion of the visible light from the light source 20 is reflected off the dots 15 on the back side 10b of the guided light diffuser panel 10, and then transmits through the front side 10a. Specifically, the light from the light source 20, which has been transmitted to the inside of the guided light diffuser panel 10, is waveguided and diffused from the entire surface of the guided light diffuser panel 10, and then outputted from front side 10a and the back side 10b. Thus, bi-directional illumination illuminates objects on both sides of the guided light diffuser panel 10.

Moreover, since the guided light diffuser panel 10 in the present embodiment is transparent, the illuminated objects are clearly visible when viewed through the guided light diffuser panel 10. This provides a transparent guided light diffuser that can provide higher efficiency of lighting and a more pleasant transparent view.

As explained, the light source resulting in the Talbot image is the light reflected from the front side 10a of the guided light diffuser panel 10. In the present embodiment, the reflected light can be reduced or eliminated using a regular anti-reflective (AR) coating or antireflection material.

(1) to (3) below are examples of coating techniques that may be applied to the front side 10a of the guided light diffuser panel 10.

### (1) Regular single film AR coating:

A coating with a refractive index of n^{1/2}, where n is the reflective index of the guided light diffuser panel 10. For example, the guided light diffuser panel 10 formed of acrylic has a reflective index of about 1.51 for most of a visible light range. Therefore, when the guided light diffuser panel 10 is an acrylic panel, the reflective index of the AR coating for the guided light diffuser panel 10 is (1.51)^{1/2} ≈ 1.23

### (2) Multi-layer coating:

A multi-layer coating is used to coat the guided light diffuser panel 10. Exemplary coatings forming the multi-layer coating include SiO₂, TiO₂, and ZrO₂. However, the multi-layer coating may be formed of other coatings.

### (3) Sub-wavelength periodic structure surface:

Instead of using a regular AR coating, the front side 10a of the guided light diffuser panel 10 is embossed or imprinted with holes or bumps to avoid or significantly reduce reflection in the front side 10a. The holes or bumps, are, for example, sub-wavelength holes or bumps. That is, if the structure period is smaller than λ, where λ is the peak wavelength of the spectrum of the light source 20 (e.g., LED), reflection does not occur for visible light.

The dots 15, provided on the back side 10b of the guided light diffuser panel 10, are light diffusing dots. The dots 15 may be, for example, one of micro-lenses, micro-dots, and micro bumps, and are formed by, for example, one of molding, embossing, screen printing, and inkjet printing.

The shapes of the dots 15 are configurable into variable designs. The shapes of the dots 15 may be different in shape and size. For example, the dots 15 may be, for example, circular, oval, curvilinear, square, rectangular, triangular, polygonal, or irregular in shape. Moreover, the dots 15 may also be about the same size or vary from one dot to another.

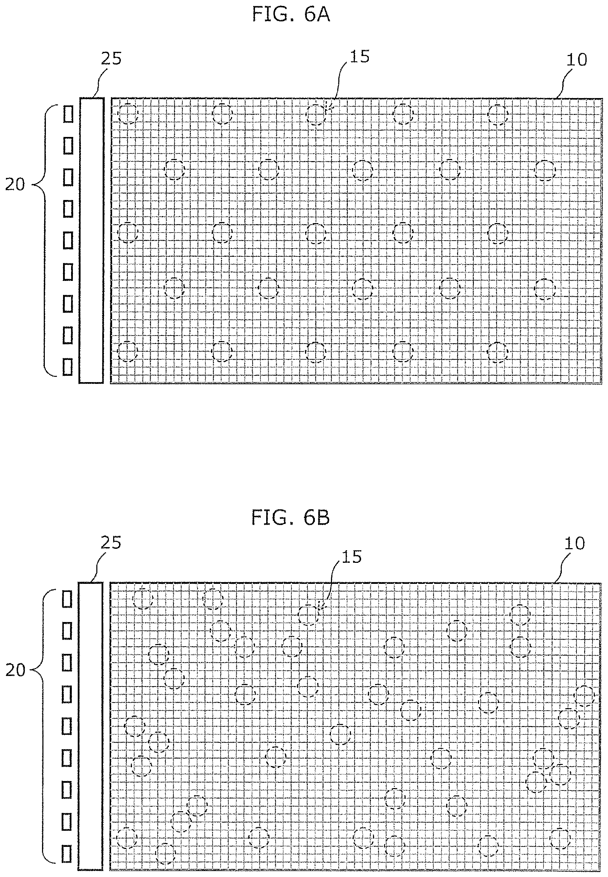

FIGS. 6A and 6B illustrate exemplary layouts of the dots 15 on a guided light diffuser panel.

As shown in FIGS. 6A and 6B, the dots 15 are laid out in a grid pattern on the back side 10b of guided light diffuser panel 10 to manipulate the original image source. The manipulation of the image source can reduce or eliminate the Talbot image generated from the image source.

The image source can be, for example, manipulated using micro-lenses formed from the dots 15. In particular, the image source can be manipulated by (a) enlarging the period of the dots 15, (b) reducing the period of the dots 15, or (c) forming local curvatures on the front side 10a of the guided light diffuser panel 10.

Fig. 6A illustrates one exemplary embodiment in which the dots 15 are distributed in a grid array, in a sparse or staggered arrangement, on the guided light diffuser panel 310. Meanwhile, Fig. 6B illustrates another exemplary embodiment in which the dots 15 are distributed in the grid array, in a random or semi-random arrangement, on the guided light diffuser panel 10. In either case of FIGS. 6A and 6B, the resulting Talbot image appears as an array of dots having a period proportional to the period of the dots 15.

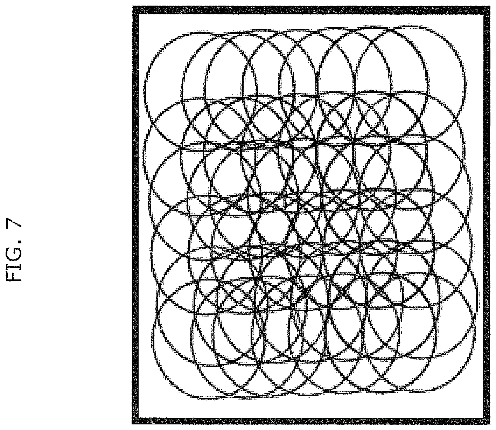

When the period of the dots 15 is small, the resultant Talbot image period is also small. Accordingly, by making the Talbot image small, the individual images of the dots 15 overlap with each other, and eventually become homogenized to create a uniform Talbot image, as illustrated in Fig. 7. This improves the problems associated with having a discrete particle image.

The minimum period of the Talbot image is determined by the minimum period of dots 15. Therefore, a smaller grid period than a conventional grid period is used in the present embodiment. For example, a conventional grid period is 339 um = 75 dpi, whereas a smaller grid period of 42.3 um = 600 dpi or 21.2 um = 1200 dpi is used in the present embodiment. Of course, the grid period is exemplary, and may be appropriately modified as readily understood by those skilled in the art.

Moreover, to maintain transparency of the guided light diffuser panel 10 while having a finer period and uniform illumination, the dots 15 may be aligned in a sparse distribution, staggered distribution, interleaved distribution, random or semi-random distribution.

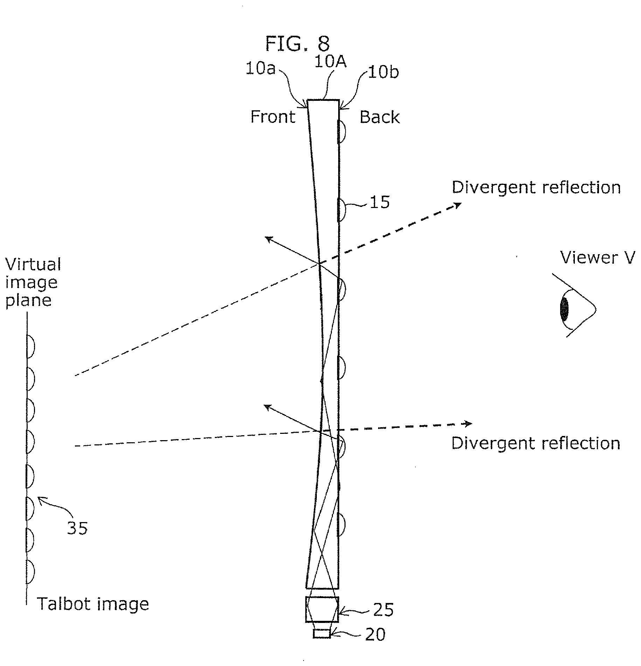

FIG. 8 illustrates an exemplary pattern layout of the dots 15 on a guided light diffuser panel 10A having a concave surface.

As shown in FIG. 8, the dots 15 are laid out in a grid pattern on the back side 10b of the guided light diffuser panel 10A to manipulate the original image source. The manipulation of the image source can reduce or eliminate the resultant Talbot image.

In the present embodiment, as illustrated in FIG. 8, the front side 10a of the guided light diffuser panel 10A has a concave surface which divergently reflects visible light. In this configuration, at least a portion of the visible light from the light source 20 is reflected off the dots 15 on the back side 10b of the guided light diffuser panel 10A, at least partially reflected off the front side 10a, and divergently transmits through the back side 10b. In this case, the curvature of the guided light diffuser panel 10 allows the light source of the Talbot image to diverge. This can reduce or eliminate the Talbot image period.

Moreover, the greater the curvature of the front side 10a of the guided light diffuser panel 10A is, the more the Talbot images overlap and become homogenized.

It should be noted that in the present embodiment, the front side 10a of the guided light diffuser panel 10A has a concave surface. However, the shape of the surface of the front side 10a is not limited to the shape described in the disclosed embodiment, but the surface of the front side 10a may take any shape as readily understood by those skilled in the art. For example, the front side 10a of the guided light diffuser panel 10a may be configured to diffuse, converge, or diverge light.

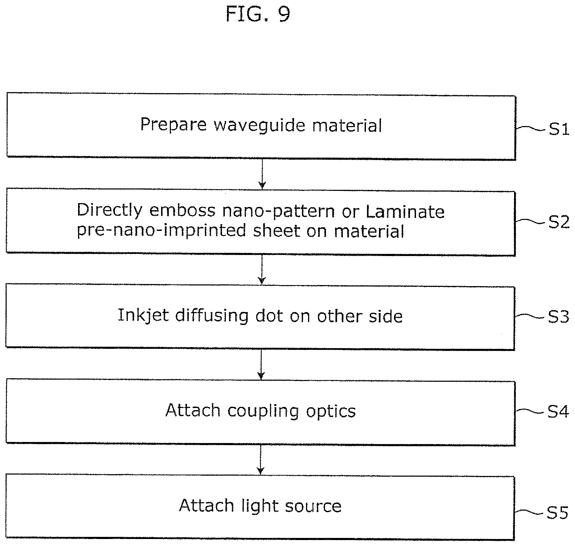

FIG. 9 is a flow diagram of a method of manufacturing the guided light diffuser in one embodiment of the present disclosure. More specifically, the flow diagram in FIG. 9 illustrates the method of manufacturing a guided light diffuser panel with first and second surfaces for waveguiding and diverging light.

Here, the first surface is a surface on which nano-patterning has been performed, and is, for example, the front side 10a in FIG. 5A or 5B. The second surface is a surface where the wavelengths of light are likely to diverge, and is, for example, the back side 10b in FIG. 5A or 5B.

In Step 1, a waveguide material (guided light panel) for guiding the light waves emitted from the light source such as an LED is prepared.

In Step 2, the first surface which has low reflectance to the wavelengths of light is prepared. Specifically, a nano-pattern is embossed, or a pre-nano-printed sheet (coating) is laminated on one side of the waveguide material.

In Step 3, the second surface having diffusing dots is prepared. Specifically, inkjet diffusing dots are printed on the other side (opposite of the surface having the nano-pattern) of the waveguide material.

In Step 4, the coupling optics is attached to the waveguide material.

In Step 5, the light source(s) is provided, and optically coupled to the waveguide material.

This enables the manufacturing of the guided light diffuser panel 10, for example as illustrated in FIG. 5A or 5B.

Although the present invention has been described and illustrated in detail, it is clearly understood that the same is by way of example only and is not to be taken by way of limitation, the scope of the present invention being limited only by the terms of the appended claims.

Although the invention has been described with reference to several exemplary embodiments, it is understood that the words that have been used are words of description and illustration, rather than words of limitation. For example, changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather the invention extends to all functionally equivalent structures, methods, and uses such as are within the scope of the appended claims.

Although the present specification describes components and functions that may be implemented in particular embodiments with reference to particular standards and protocols, the present invention is not limited to such standards and protocols. Such standards are periodically superseded by faster or more efficient equivalents having essentially the same functions. Accordingly, replacement standards and protocols having the same or similar functions are considered equivalents thereof.

The illustrations of the embodiments described herein are intended to provide a general understanding of the various embodiments. The illustrations are not intended to serve as a complete description of all of the elements and features of apparatus and systems that utilize the structures or methods described herein. In this regard, no attempt is made to show structural details of the present invention in more detail than is necessary for the fundamental understanding of the present invention. Many other embodiments may be apparent to those of skill in the art upon reviewing the present invention. Moreover, other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

The present invention also includes an embodiment obtained by making various modifications, which those skilled in the art would conceive, to each embodiment, or an embodiment obtained by combining the structural elements and functions of the respective embodiments unless the combination depart from the scope of the present invention.

### Reference Signs List

10, 10A, 110, 210, 310, 410 guide light diffuser panel
10a, 210a, 310a front side
10b, 210b, 310b back side
12 diffusing surface
14 flat surface
15 dots
16, 16a coat film
25 beam shaping optics
35 virtual image

## Claims

1. A guided light diffuser panel (10A) to which a light source (20) is optically coupled, comprising:
a first surface (10a) that has a concave shape which enables divergent reflection of visible light; and
a second surface (10b) on which diffusing dots (15) are arranged, the diffusing dots (15) being one of micro-lenses, micro-dots, and micro-bumps formed by one of molding, embossing, screen printing, and inkjet printing,
wherein the visible light from the light source (20) transmits through the guided light diffuser panel (10A), and
at least a portion of the visible light from the light source (20) is reflected from the diffusing dots (15) on the second surface (10b), and divergently transmits through the second surface (10b) after at least partially reflecting off the first surface (10a).

2. The guided light diffuser panel (10A) according to Claim 1, wherein the first surface (10a) is coated with an anti-reflective material.

3. The guided light diffuser panel (10A) according to Claim 1 or 2, wherein the diffusing dots (15) cover 20 to 50% of the second surface (10b) of the guided light diffuser panel (10A); and/or
wherein the diffusing dots (15) are distributed in a grid array, in one of sparse, staggered, random, semi-random, and interleaved arrangements, on the guided light diffuser panel (10A).

4. The guided light diffuser panel (10A) according to any one of Claims 1 to 3, wherein the diffusing dots (15) are arranged in a predetermined period; and/or
wherein shapes of the dots (15) are configurable into variable designs.

5. The guided light diffuser panel (10A) according to any one of Claims 1 to 4, wherein the guided light diffuser panel (10A) is transparent; and/or
wherein the light source (20) is an LED.

6. The guided light diffuser panel (10A) according to any one of Claims 1 to 5, wherein the first surface (10a) is coated with a single-layer or multi-layer anti-reflective coating.

7. The guided light diffuser panel (10A) according to any one of Claims 1 to 6, wherein the light source (20) is mounted on at least one location on one edge of the guided light diffuser panel, and transmits a plurality of wavelengths of light into the guided light diffuser panel (10A).

8. A method of manufacturing a guided light diffuser panel (10) to which a light source (20) is optically coupled, the method comprising:
preparing a first surface (10a) that is coated with an anti-reflective material and that has a concave shape which enables divergent reflection of visible light; and
preparing a second surface (10b) having diffusing dots (15), the diffusing dots (15) being one of micro-lenses, micro-dots, and micro-bumps formed by one of molding, embossing, screen printing, and inkjet printing,
wherein visible light from the light source (20) transmits through the guided light diffuser panel (10), and
at least a portion of the visible light from the light source (20) is reflected from the diffusing dots (15) on the second surface (10b), and transmits through the first surface (10a).

9. A light fixture comprising the guided light diffuser panel (10, 10A) to which a light source (20) is optically coupled, according to any one of Claims 1 to 7.

## Patentansprüche

1. Geführtes Lichtdiffusorpaneel (10A), mit dem eine Lichtquelle (20) optisch gekoppelt ist, umfassend:
eine erste Oberfläche (10a), die deine konkave Form aufweist, die eine divergente Reflexion sichtbaren Lichts ermöglicht; und
eine zweite Oberfläche (10b), auf der streuende Punkte (15) angeordnet sind, wobei die streuenden Punkte (15) eines von Mikrolinsen, Mikropunkten und Mikroerhebungen sind, die durch eines von Formen, Prägen, Siebdrucken und Tintenstrahldrucken gebildet werden,
wobei das sichtbare Licht von der Lichtquelle (20) durch das geführte Lichtdiffusorpaneel (10A) hindurchtritt, und
mindestens ein Abschnitt des sichtbaren Lichts aus der Lichtquelle (20) von den streuenden Punkten (15) auf der zweiten Oberfläche (10b) reflektiert wird und divergierend durch die zweite Oberfläche (10b) hindurchtritt, nachdem es mindestens teilweise von der ersten Oberfläche (10a) reflektiert wird.

2. Geführtes Lichtdiffusorpaneel (10A) nach Anspruch 1, wobei die erste Oberfläche (10a) mit einem Antireflexmaterial beschichtet ist.

3. Geführtes Lichtdiffusorpaneel (10A) nach Anspruch 1 oder 2, wobei die streuenden Punkte (15) 20 bis 50% der zweiten Oberfläche (10b) des geführten Lichtdiffusorpaneels (10A) bedecken; und/oder
wobei die streuenden Punkte (15) in einem Gitter-Array in einer von zerstreuten, versetzt angeordneten, zufälligen, halbzufälligen und verschachtelten Ausrichtungen auf dem geführten Lichtdiffusorpaneel (10A) verteilt sind.

4. Geführtes Lichtdiffusorpaneel (10A) nach einem der Ansprüche 1 bis 3, wobei die streuenden Punkte (15) in einer vorbestimmten Periode angeordnet sind; und/oder
wobei Formen der Punkte (15) in verschiedene Ausführungen konfigurierbar sind.

5. Geführtes Lichtdiffusorpaneel (10A) nach einem der Ansprüche 1 bis 4, wobei das geführte Lichtdiffusorpaneel (10A) transparent ist; und/oder
wobei die Lichtquelle (20) eine LED ist.

6. Geführtes Lichtdiffusorpaneel (10A) nach einem der Ansprüche 1 bis 5, wobei die erste Oberfläche (10a) mit einer einzel- oder mehrschichtigen Antireflexbeschichtung beschichtet ist.

7. Geführtes Lichtdiffusorpaneel (10A) nach einem der Ansprüche 1 bis 6, wobei die Lichtquelle (20) an mindestens einer Stelle an einem Rand des geführten Lichtdiffusorpaneels befestigt ist und eine Vielzahl von Lichtwellenlängen in das geführte Lichtdiffusorpaneel (10A) aussendet.

8. Verfahren zur Herstellung eines geführten Lichtdiffusorpaneels (10), mit dem eine Lichtquelle (20) optisch gekoppelt ist, wobei das Verfahren umfasst:
Vorbereiten einer ersten Oberfläche (10a), die mit einem Antireflexmaterial beschichtet ist und die eine konkave Form aufweist, die eine divergente Reflexion sichtbaren Lichts ermöglicht; und
Vorbereiten einer zweiten Oberfläche (10b), die streuende Punkte (15) aufweist, wobei die streuenden Punkte (15) eines von Mikrolinsen, Mikropunkten und Mikroerhebungen sind, die durch eines von Formen, Prägen, Siebdrucken und Tintenstrahldrucken ausgebildet werden,
wobei das sichtbare Licht von der Lichtquelle (20) durch das geführte Lichtdiffusorpaneel (10) hindurchtritt, und
mindestens ein Abschnitt des sichtbaren Lichts aus der Lichtquelle (20) von den streuenden Punkten (15) auf der zweiten Oberfläche (10b) reflektiert wird und durch die erste Oberfläche (10a) hindurchtritt.

9. Leuchte, die das geführte Lichtdiffusorpaneel (10, 10A), mit dem eine Lichtquelle (20) optisch gekoppelt ist, nach einem der Ansprüche 1 bis 7 umfasst.

## Revendications

1. Panneau diffuseur de lumière guidée (10A) auquel une source de lumière (20) est optiquement accouplée, comportant :
une première surface (10a) qui a une forme concave qui permet une réflexion divergente de la lumière visible ; et
une seconde surface (10b) sur laquelle des points de diffusion (15) sont disposés, les points de diffusion (15) figurant parmi des micro-lentilles, des micro-points et des micro-bosses formés par une opération parmi le moulage, l'embossage, la sérigraphie et l'impression à jet d'encre,
dans lequel la lumière visible provenant de la source de lumière (20) se transmet à travers le panneau diffuseur de lumière guidée (10A) et
au moins une portion de la lumière visible provenant de la source de lumière (20) est réfléchie à partir des points de diffusion (15) sur la seconde surface (10b) et se transmet de façon divergente à travers la seconde surface (10b) après s'être au moins partiellement réfléchie sur la première surface (10a).

2. Panneau diffuseur de lumière guidée (10A) selon la revendication 1, dans lequel la première surface (10a) est revêtue d'un matériau anti-réfléchissant.

3. Panneau diffuseur de lumière guidée (10A) selon la revendication 1 ou 2, dans lequel les points de diffusion (15) couvrent entre 20 % et 50 % de la seconde surface (10b) du panneau diffuseur de lumière guidée (10A) ; et/ou
dans lequel les points de diffusion (15) sont répartis dans un réseau en grille, dans un état parmi un agencement clairsemé, étalé, aléatoire, semi-aléatoire et entrelacé sur le panneau diffuseur de lumière guidée (10A).

4. Panneau diffuseur de lumière guidée (10A) selon l'une quelconque des revendications 1 à 3, dans lequel les points de diffusion (15) sont disposés dans une période prédéfinie ; et/ou
dans lequel des formes des points (15) sont configurables selon des conceptions variables.

5. Panneau diffuseur de lumière guidée (10A) selon l'une quelconque des revendications 1 à 4, dans lequel le panneau diffuseur de lumière guidée (10A) est transparent ; et/ou
dans lequel la source de lumière (20) est une DEL.

6. Panneau diffuseur de lumière guidée (10A) selon l'une quelconque des revendications 1 à 5, dans lequel la première surface (10a) est revêtue d'un revêtement anti-réfléchissant monocouche ou multicouche.

7. Panneau diffuseur de lumière guidée (10A) selon l'une quelconque des revendications 1 à 6, dans lequel la source de lumière (20) est montée sur au moins un emplacement d'un premier bord du panneau diffuseur de lumière guidée et transmet une pluralité de longueurs d'onde de lumière dans le panneau diffuseur de lumière guidée (10A).

8. Procédé de fabrication d'un panneau diffuseur de lumière guidée (10) auquel une source de lumière (20) est optiquement accouplée, le procédé comportant :
la préparation d'une première surface (10a) qui est revêtue d'un matériau anti-réfléchissant et qui a une forme concave qui permet une réflexion divergente de la lumière visible ; et
la préparation d'une seconde surface (10b) ayant des points de diffusion (15), les points de diffusion (15) figurant parmi des micro-lentilles, des micro-points et des micro-bosses formés par une opération parmi le moulage, l'embossage, la sérigraphie et l'impression à jet d'encre,
dans lequel la lumière visible provenant de la source de lumière (20) se transmet à travers le panneau diffuseur de lumière guidée (10) et
au moins une portion de la lumière visible provenant de la source de lumière (20) est réfléchie à partir des points de diffusion (15) sur la seconde surface (10b) et se transmet à travers la première surface (10a).

9. Luminaire comportant le panneau diffuseur de lumière guidée (10, 10A) auquel une source de lumière (20) est optiquement accouplée, selon l'une quelconque des revendications 1 à 7.
